(19) Europäisches Patentamt
European Patent Office
Office européen des brevets

(11) **EP 4 769 272 A1**

(12) **EUROPEAN PATENT APPLICATION**

(43) Date of publication:
**01.07.2026 Bulletin 2026/27**

(21) Application number: **24307338.4**

(22) Date of filing: **30.12.2024**

(51) International Patent Classification (IPC):
**G06Q 20/34** *(2012.01)* **G06F 3/04845** *(2022.01)*
**G06K 1/12** *(2006.01)* **G07F 7/08** *(2006.01)*

(52) Cooperative Patent Classification (CPC):
**G06Q 20/355; G06F 3/04845; G06F 30/12;
G06F 40/106; G07F 7/0806;** G06F 2111/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **THALES DIS FRANCE SAS**
**92190 Meudon (FR)**

(72) Inventor: **AGGARWAL, Nitika**
**201301 Noida (IN)**

(74) Representative: **Grevin, Emmanuel**
**Thales Dis France SAS**
**Intellectual Property Department**
**Avenue du Jujubier, Z.I. Athélia IV**
**13705 La Ciotat (FR)**

(54) **METHOD AND SYSTEM FOR MANAGING EXCLUSION ZONES IN CARD CUSTOMIZATION**

(57) Disclosed are a method and a system for detecting collision between at least two areas on a body of a smart card. Exemplary method comprises designating a first area, on the body of the smart card, where a user is allowed to customize by placing object(s). The method further comprises designating exclusion zone(s), within the first area, where customization by the user is prohibited. The method further comprises receiving a user input corresponding to placement of the object(s), detecting whether there is a collision between any exclusion zone(s) and any object(s), and in response to the detected collision, generating a prompt for the user to adjust a corresponding position of a colliding object within the first area to avoid collision with any of the exclusion zone(s).

FIG. 5

**Description**

**FIELD OF THE INVENTION**

The present invention relates to customization of smart cards, and more particularly, to a method and a system for providing exclusion zones on a body of a smart card.

**BACKGROUND OF THE INVENTION**

The proliferation of digital payment systems has revolutionized the financial landscape, enabling consumers to conduct transactions via mobile apps, online platforms, and contactless technologies. However, despite this evolution, the payment cards, such as debit and credit cards, still remain common and relevant means for conducting daily transactions. Since the payment card is typically carried by individuals at most times, personalization becomes imperative from the standpoint of financial institutions offering such payment cards for better customer card experience and customer retention.

While some financial institutions have begun offering basic customization options, such as selecting card colors or adding a name, these options remain relatively limited and do not fully leverage the potential for individual expression. Statistics exhibit that the customized cards outperformed the traditional cards by a fair margin in certain criteria such as number of transactions and customer retention. Accordingly, the financial institutions need a mechanism to have the card experience customized by customers for improving customer engagement. Although existing approaches may provide a particular area on payment cards for customization and user creativity, there are certain areas that are reserved, i.e., where customization is prohibited, due to restrictions imposed by the financial institutions.

Therefore, in the state of the art, no solution exists that particularly defines how to remove the reserved area(s) while allowing other areas of card for customization by customers.

**SUMMARY OF THE INVENTION**

The present invention is defined by the attached claims. In particular, the present invention proposes a method (700) and a system (800) of detecting collision between at least two areas on a body of a smart card.

In an aspect, the method (700) comprises designating (702) a first area on the body of the smart card. The first area, in embodiments, corresponds to an area where a user is allowed to customize by placing one or more objects. The method (700) further comprises designating (704) one or more exclusion zones within the first area. The one or more exclusion zones, in embodiments, correspond to one or more areas on the body of the smart card where customization by the user is prohibited. The method (700) further comprises receiving (706) a user input corresponding to placement of the one or more objects in the first area. Subsequently, the method (700) further comprises detecting (708) whether there is a collision between any of the one or more exclusion zones and any of the one or more objects placed by the user. In response to a detection of the collision, the method (700) further comprises generating (710) a prompt for the user to adjust a corresponding position of a colliding object, among the one or more objects, within the first area to avoid collision with any of the one or more exclusion zones.

Preferably, the collision is detected by application of a separating axis theorem.

As an example, the one or more exclusion zones correspond to at least an area where a chip is placed on the body of the smart card.

As another example, the one or more exclusion zones correspond to at least one of an area indicating a logo of an issuing authority of the smart card, card number, name of card holder, or expiry details of the smart card.

As yet another example, the one or more exclusion zones correspond to at least an area indicating a logo of a payment scheme associated with the smart card.

In preferable implementations, the one or more objects correspond to at least one of sticker, text, monogram, or image.

In certain implementations, the user input is received by receiving a selection of the one or more objects by the user from a library of predefined objects.

Preferably, the method (700) further comprises in response to a detection that there is no collision between any of the one or more exclusion zones and any of the one or more objects, accepting placement of the one or more objects in the first area, and generating a customized smart card for the user by customizing the body of the smart card with the one or more objects placed by the user.

In certain implementations, the one or more exclusion zones are designated by an issuing authority of the smart card.

In preferable implementations, generating the prompt comprises changing a colour of a boundary of the colliding object.

In another aspect, a system (800) to detect collision between at least two areas on a body of a smart card (100), is disclosed. The system comprises one or more processors (802) and a storage medium (808) communicatively coupled to the one or more processors (802). The storage medium (808) comprising one or more executable instructions (812), The one or more processors (802), upon execution of the one or more executable instructions (812), are configured to designate a first area (202) on the body of said smart card (100), wherein the first area (202) corresponds to an area where a user is allowed to customize by placement of one or more objects (302). The one or more processors (802) is further configured to designate one or more exclusion zones (204) within the first area (202), wherein the one or more exclusion zones (204) correspond to one or more areas on the body of the smart card (100) where customization by the user is prohibited. Further , the one or more processors (802) is configured detect whether there is a collision between any of the one or more exclusion zones (204) and any of the one or more objects (302) placed the said use. In response to a detection of the collision the one or more processors (802) is configured to cause , generation of the prompt for the user to adjust a corresponding position of a colliding object (302A), among the said one or more objects (302), within the first area (202) to avoid collision with any of said one or more exclusion zones (204).

## BRIEF DESCRIPTION OF THE DRAWINGS

The examples of the present disclosure are described herein with reference to the accompanying figures. It should be noted that the description and figures relate to exemplary implementations and should not be construed as a limitation to the present disclosure. It is also to be understood that various arrangements may be devised that, although not explicitly described or shown herein, embody the principles of the present disclosure. Moreover, all statements herein reciting principles, aspects, and examples of the present disclosure, as well as specific examples, are intended to encompass equivalents thereof.

- Figures 1A and 1B illustrate respective diagrams schematically exemplifying conventional approaches utilized by existing systems to determine an allowed area on a body of a smart card for customization.

- Figure 2 illustrates exemplary exclusion zones on the body of the smart card, according to an embodiment of the present invention.

- Figure 3 illustrates exemplary objects placed by a user on the body of the smart card along with the presence of one or more exclusion zones, according to an embodiment of the present invention.

- Figure 4 illustrates an exemplary collision between an object placed by the user and an exclusion zone present on the body of the smart card, according to an embodiment of the present invention.

- Figure 5 illustrates another exemplary collision between an object placed by the user and an exclusion zone present on the body of the smart card, according to an embodiment of the present invention.

- Figure 6 illustrates an exemplary method flow between a user device and a server for generating a customized smart card, according to an embodiment of the present invention.

- Figure 7 illustrates a flowchart for detecting collision between at least two areas on the body of the smart card, according to an embodiment of the present invention.

- Figure 8 illustrates a block diagram of a system that may be utilized for detecting collision, in accordance with implementations of the present invention.

## DETAILED DESCRIPTION OF THE PREFERRED EMBODIMENTS

The preferred embodiments according to the present invention will be described in detail with reference to appended drawings. The detailed descriptions provided below together with appended drawings are intended only to explain illustrative embodiments of the present invention, which should not be regarded as the sole embodiments of the present invention. The detailed descriptions below comprise specific information to provide a complete understanding of the present invention. However, those skilled in the art will be able to comprehend that the present invention can be embodied without specific information.

For some cases, to avoid obscuring the technical principles of the present invention, structures, and devices well-known to the public can be omitted or can be illustrated in the form of block diagrams utilizing fundamental functions of the structures and the devices.

Unless the context indicates otherwise, throughout the specification and claims which follow, the word "comprise" and variations thereof, such as, "comprises" and "comprising" are to be construed in an open, inclusive sense that is as "including, but not limited to." Further, the terms "first," "second," and similar indicators of the sequence are to be construed as interchangeable unless the context clearly dictates otherwise.

As used in the description and the appended claims, the singular forms "a," "an," and "the" comprise plural referents unless the content clearly dictates otherwise. It should also be noted that the term "or" is generally employed in its broadest sense, that is, as meaning "and/or" unless the content clearly dictates otherwise.

"And/or" for two possibilities means either or both stated possibilities ("A and/or B" covers A alone, B alone, or both A and B take together), and when present with three or more stated possibilities means any individual possibility alone, all possibilities taken together, or some combination of possibilities that is less than all the possibilities. The language in the format "at least one of A ... and N" where A through N are possibilities means "and/or" for the stated possibilities (for example, at least one A, at least one N, at least one A and at least one N, and the like).

Reference to any "example" herein ( "for example," "an example of," "in an example," or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term.

Certain terms and phrases have been used throughout the disclosure and will have the following meanings in the context of the ongoing disclosure:
The term "user" within the context of the present disclosure refers to a user of a smartcard, and the term "consumer" refers to a person who consumes the smart card service offered by the financial institutions. Accordingly, terms "user" and "consumer" may be used interchangeably depending on the context in the present disclosure, and should be interpreted accordingly.

Further, the term "payment card" or simply "card" within the context of the present disclosure may refer to a credit card, debit card, prepaid card, a smart card, or any other card held by a user that is to be customized. A smart card, for example, is a type of payment card that contains embedded integrated circuits, allowing for secure data storage and processing, thereby making smart cards less susceptible to fraud as compared to traditional cards. The stored data may comprise security credentials, transaction history, and/or user-related information. Unlike traditional cards requiring physical swiping through a reader, the smart cards may comprise contactless technology or near field communication (NFC) for quick tap-and-go payments. The smart cards have advanced capabilities of performing offline transactions and supporting multiple applications beyond payments such as identity verification, access control, and the like. The embodiments described herein with reference to smart cards are applicable to all other types of payment cards without limitation.

The terms "coverage area" and "allowed area" refer to an area where user is allowed to customize by adding or placing object(s), and are used interchangeably depending on the context of the present disclosure.

The term "object" refers to a user interface (UI) element or creative element intended to be placed by the user on a layout corresponding to a body of the smart card. Examples of objects may comprise but are not limited to stickers, cut-outs, icons, text, monograms, images, patterns, sketches, doodles, and the like.

The term "card issuing authority (CIA)" or "issuing authority" refers to an authority or organization which is responsible for issuing smart cards and management thereof. Typically, various aspects of smart cards such as production, card design, personalization/customization, security management, and card distribution are handled by CIA. Further, the usability of smart cards across various applications such as banking, access control, and identification is managed by the CIA. Examples of CIA may comprise any of banks, payment networks, credit unions, fintech companies, retailers, and/or service providers. Banks may be any national or international chain of banks such as but not limited to Deutsche Bank, HSBC Holdings, Bank of America, CitiBank, and others. Further, payment networks may be, for example, any of Master-Card®, VISA®, American Express®, and others. Further, credit unions may be, for example, any of Nationwide Building Society, Caisse d'Épargne, Credit Agricole, and the like. Fintech companies offering smart cards may comprise but are not limited to Revolut, Chime, and the like. Further, retailers can be, for example, any of Walmart, Target, and the like. Service provider may be Thales DIS, as an example.

Personalization or customization of payment cards provides a unique experience for each user. The customized cards allow the users to express their individuality, while being easily recognizable among other cards associated with a user. Further, the customized cards are difficult to forge or replicate, adding an extra layer of security. The customization of payment cards involves encouraging user's creativity all over the visible space on a body of a payment card. Typically, financial institutions offering such customization of payment cards to consumers provide a coverage area or dedicated area on the body of the payment card, where the users may exhibit their creativity.

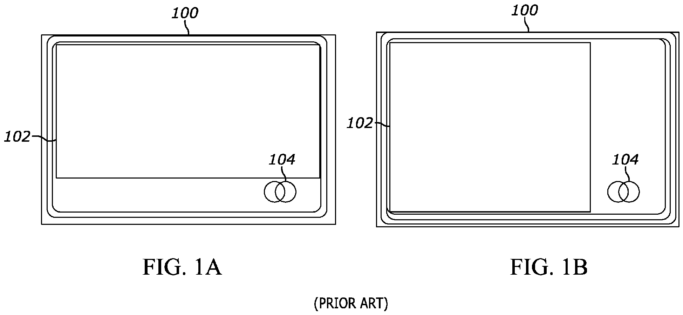

The user may add or place objects, for example, stickers, text, monograms, or images according to their taste and preferences on the body of the smart card. Traditionally, the existing systems may have a designated area, for example, in a rectangular shape inside the payment card that becomes the allowed area open for user customization. Typically, the whole card area is allowed for user customization. However, there may be certain areas inside the payment card that the card issuing authority (CIA) determines as being reserved, i.e., where customization is prohibited by user. Such certain areas may comprise but are not limited to logo of the CIA or payment scheme, chip area, and the like. Since the allowed area is rectangular in shape, if there is an area inside the card that the CIA would want to restrict, then the allowed area is required to be limited to either a rectangle above the restricted area or to the side. As depicted in Figure 1A, the entire allowed area on a body of a card 100, such as smart card, is limited to the rectangular shaped area which corresponds to the allowed area 102 above a restricted area 104 corresponding to a logo of the payment scheme, as an example. The restricted area 104, as depicted, is an area where user customization or creativity is prohibited by the CIA for the reasons concerning security, discernibility, and minimizing susceptibility to fraudulent activities.

Similarly, Figure 1B depicts a scenario where the allowed area 102 is limited to a side of the restricted area 104 on the body of the smart card 100. Therefore, Figures 1A and 1B exhibit conventional approaches utilized by the existing systems to determine the allowed area on the body of the smart card for customization.

However, there are certain limitations associated with these approaches. For example, the allowed area 102 is restricted to either above or to the side of the restricted area 104 in Figures 1A and 1B respectively, leaving a significant area on the body of the smart card 100 underutilized. Further, if there is more than one restricted area 104, it becomes difficult to choose the allowed area 102. Accordingly, a problem with the conventional approaches is how to remove the restricted or reserved area (like 104) while allowing all other areas of the card. In other words, the allowed area (like 102) needs to be maximized while reserving the restricted area (like 104) on the card.

The proposed technical solution to the above-identified problem comprises provisioning one or more exclusion zones, inside the coverage or allowed area, which block the surrounding area from user customizations. In preferred implementations, the solution comprises considering an exclusion zone and user's placed object as separate blocks and application of a separating axis theorem (SAT) to detect a collision between these two blocks. In response to the detected collision, the user is required to make adjustments to move or change a position of a colliding object, leaving the restricted area or exclusion zone(s). Advantageously, the proposed solution offers more flexibility to the financial institutions while designing the cards and/or enabling user customizations for its customers.

Various embodiments of the present invention will now be described with respect to accompanying figures.

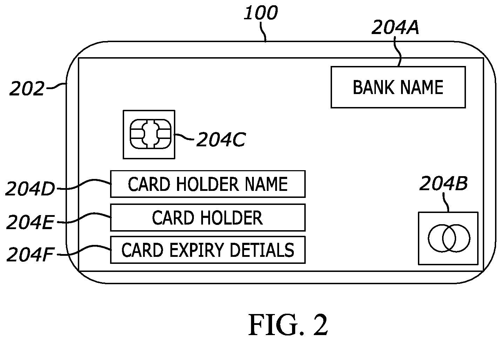

Figure 2 illustrates exemplary exclusion zones on the body of the smart card 100, according to an embodiment of the present invention. Exclusion zones can be interpreted as zones or areas on the body of the smart card 100 that are excluded by the CIA or any other authority from user customization. Figure 2 depicts exclusion zones 204A, 204B, 204C, 204D, 204E, and 204F, collectively referred to as "exclusion zones 204" within the allowed area 202. The allowed area 202 may be referred to as "first area" where user customization is allowed.

Exemplary exclusion zones comprise 204A corresponding to an exclusion zone for a bank name or an issuing authority (for example, CIA), 204B corresponding to an exclusion zone for a logo of a payment scheme or bank, 204C corresponding to an exclusion zone for chip area, 204D corresponding to an exclusion zone for card holder name, 204E corresponding to an exclusion zone for card number, and 204F corresponding to an exclusion zone for card expiry details. It shall be noted that the depicted areas and number of exclusion zones 204 are exemplary and may vary from one card to another. Further, the orientation of elements (for example, exclusion zones 204) placed on the smart card may be either portrait or landscape, without limitation.

The proposed solution entails provisioning one or more of the exclusion zones 204 inside the entire allowed (or coverage) area 202, without wasting any space or area due to shape of the smart card or the allowed area 202 for user customization. In order to facilitate seamless user customization experience for the smart cards, it is required that one or more objects intended to be placed by the user on the allowed area 202 do not collide with any of the exclusion zones 204 on the body of the smart card 100.

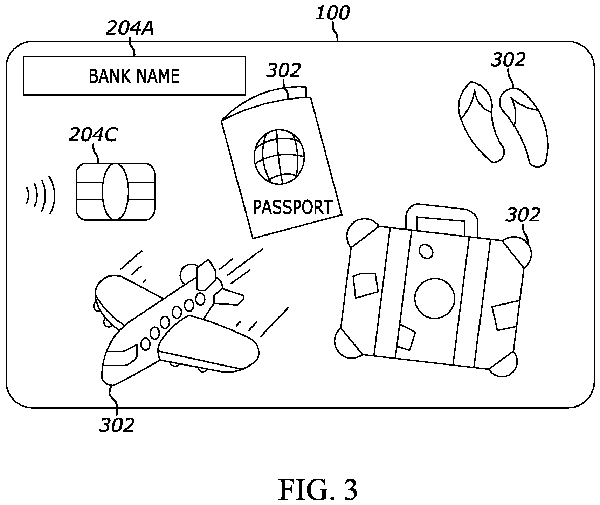

Figure 3 illustrates exemplary objects placed by a user on the body of the smart card 100 along with presence of one or more exclusion zones 204, according to an embodiment of the present invention. Figure 3 is described in conjunction with Figure 2, and the context and usage of terms should be interpreted accordingly.

One or more objects 302, as depicted in Figure 3, correspond to elements or icons placed by user on the allowed area. Such elements may comprise but are not limited to stickers, text, monogram, image(s), and the like that may be selected by the user from a library of predefined objects. The library, for example, may be an online database with data stored on server or on cloud associated with an online platform. As an example, objects 302 in Figure 3 correspond to sticker or cut-outs placed by the user on the body of the smart card 100, which depict footwear, suitcase, airplane, and passport, indicating travel related icons. Such objects 302 are usually representative of user's taste and preferences, and the objects 302 may be created by the user or selected from the library, in different embodiments, without limitation.

Further, in Figure 3, exclusion zones 204A and 204C corresponding to exclusion zones for bank name and chip area are depicted on the body of the smart card 100 as reserved areas by an issuing authority. In this embodiment, the objects 302 placed by the user co-exist with the exclusion zones 204A and 204C without any collision, thereby indicating an ideal scenario for user customization. Since it is required according to industry standards or rules/restrictions imposed by the CIA, the exclusion zones 204A and 204C should not be obscured or collided with any user-placed object (for example, 302) or customization performed by the user. However, there may be scenarios where a user-placed object (for example, 302) collides with a reserved exclusion zone (for example, 204). Such embodiments are described as set forth.

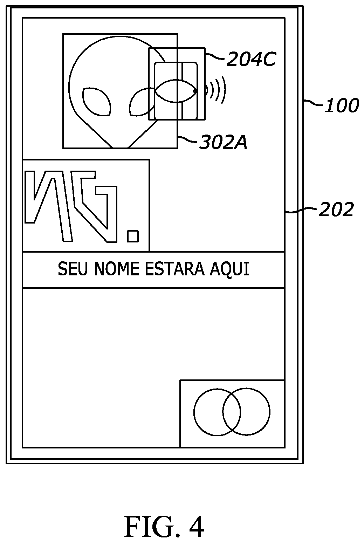

Figure 4 illustrates an exemplary collision between an object placed by the user and an exclusion zone present on the body of the smart card 100, according to an embodiment of the present invention. Figure 4 is described in conjunction with previous figures, and the context and usage of terms should be interpreted accordingly.

In Figure 4, allowed area (or first area) is designated as 202 on the body of the smart card 100. The allowed area 202, where user customization is allowed, comprises an exemplary exclusion zone 204C and an exemplary user-placed object 302A. The user, according to their preference, placed the object 302A depicting a skull sticker or cut-out on the chip area corresponding to the exclusion zone 204C. The collision between these two blocks of the object 302A and the exclusion zone 204C is prohibited, and the boundary of each block is required to be non-overlapping with the other block. Such a collision between these two blocks is detected by application of Separation Axis Theorem (SAT), treating the object 302A and the exclusion zone 204C as separate blocks. In fact, any two objects on the allowed area 202 can be treated as two blocks to detect collisions.

Precisely, SAT provides a mathematical way to determine whether two convex objects (for example, object 302A and the exclusion zone 204C) in space are intersecting or not. The theorem states that two convex shapes do not intersect if and only if there exists a line (or axis) along which the projections of the two shapes do not overlap. Conversely, if no such axis exists, the two objects must be intersecting.

With respect to two shapes of the object 302A and the exclusion zone 204C, SAT involves projecting both shapes onto a potential separation axis. If the projections of the two shapes on this axis do not overlap, the shapes are determined to be not intersecting.

For any vector n, the projection of a point p onto n is given by:

$$\text{proj}_{\mathbf{n}}(\mathbf{p}) = \frac{\mathbf{p} \cdot \mathbf{n}}{\|\mathbf{n}\|}$$

where n is the separation axis, . is the dot product, and $\|\mathbf{n}\|$ is the magnitude of the vector.

A shape consists of multiple points and the projection of the entire shape onto an axis is the range of projections of all its vertices onto that axis.

Therefore, for shape A (for example, object 302A) with vertices $v_1$, $v_2$, ..., $v_n$, the projection of A onto axis n is the interval:

$$\left[\min_i(\mathbf{v}_i \cdot \mathbf{n}), \max_i(\mathbf{v}_i \cdot \mathbf{n})\right]$$

The projection intervals of shapes A and B (corresponding to the object 302A and the exclusion zone 204C) onto a given axis n is represented as:

$$P_A = [a_{min}, a_{max}] \text{ for shape A}$$

$$P_B = [b_{min}, b_{max}] \text{ for shape B}$$

If these two intervals do not overlap, then:

$$a_{max} < b_{min} \quad \text{or} \quad b_{max} < a_{min}$$

If the above condition holds true for any axis, then the shapes of two objects (the object 302A and the exclusion zone 204C) are determined to be not intersecting or colliding.

Accordingly, SAT is utilized as a theorem to detect collisions between shapes of any two objects on the allowed area 202 by performing computations, as described above, for each shape of the object.

As a collision detection mechanism, SAT is effective in quickly determining whether two convex shapes are colliding by projecting them onto potential separating axes. In fact, the independent nature of projections allows for potential parallelization in computing collisions for multiple shapes, which can lead to performance improvements. Also, the reliance on geometric properties, allows SAT to provide reliable results while remaining computationally efficient. Moreover, SAT works well with a wide variety of convex shapes and can handle complex geometries by breaking them down into simpler components. Further, the mathematical basis of SAT is relatively straightforward, relying on basic vector operations (dot products and comparisons), making it easier to implement.

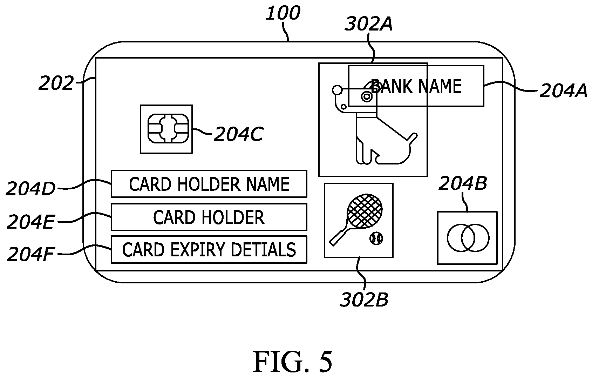

Figure 5 illustrates another exemplary collision between an object (for example, 302) placed by the user and an exclusion zone (for example, 204) present on the body of the smart card 100, according to an embodiment of the present invention. Figure 5 is described in conjunction with previous figures, and the context and usage of terms should be interpreted accordingly.

In Figure 5, exclusion zones 204A-F are depicted same as those depicted in Figure 2, and are not described again for the sake of brevity. The allowed area (or first area) 202 corresponds to an area where the user may place the one or more objects 302 according to user's preference. As depicted in Figure 5, the user may either select from the library or create an object 302A, and place the object 302A on a specific position on the allowed area 202. After the user places the object 302A, the collision detection mechanism is applied to detect if the user-placed object 302A collides with any of the exclusion zones 204A-F present on the body of the smart card 100. In preferable implementations, SAT is applied to detect the collision between rectangular blocks corresponding to the object 302A and each of the exclusion zones 204A-F. Upon the application of collision detection mechanism, it is determined that a boundary of the rectangular block for exclusion zone 204A collides with a boundary of the rectangular block for the user-placed object 302A. In response to the detection of collision between the user-placed object 302A and the exclusion zone 204A, a prompt is generated for the user to adjust the corresponding position of the colliding object 302A within the allowed area 202, to avoid collision with any of the exclusion zones 204A-F. Once the user has placed the object 302A to a new position and the collision detection mechanism detects no collision with any of the exclusion zones 204A-F, then the position of the user-placed object 302A is accepted and such customization is allowed by the present system. The components of the present system enabling user-customization and provisioning of exclusion zones, as provided by the proposed solution, will be described in subsequent figures.

Further, the user may decide to select from the library or create another object 302B, and place the object 302B on a specific or user-preferred position on the allowed area 202. After placement of the object 302B, it is determined by the collision detection mechanism if the user-placed object 302B collides with any of the exclusion zones 204A-F on the allowed area 202. In response to detecting that the object 302B does not collide with any of the exclusion zones 204A-F, the placement of the object 302B is accepted in the allowed area 202 by the present system.

Therefore, the user customization is provided on the body of the smart card 100, specifically on the allowed area 202, by the placement of the objects 302A and 302B by the user at non-colliding positions with any of the exclusion zones 204A-F using the collision detection mechanism.

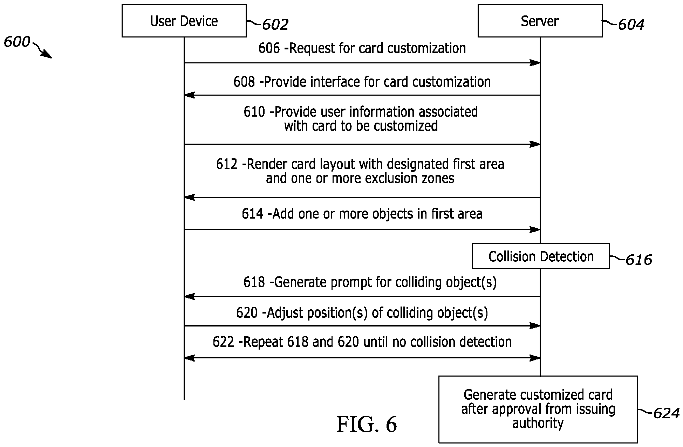

Figure 6 illustrates an exemplary method flow 600 between a user device 602 and a server 604 for generating a customized smart card, according to an embodiment of the present invention. Figure 6 is described in conjunction with previous figures, and the context and usage of terms should be interpreted accordingly. Although the steps in the method flow 600 depicts a particular sequence of operations, the sequence may be altered without departing from the scope of the present disclosure. For example, some of the operations depicted may be performed in parallel or in a different sequence that does not materially affect the function of the method flow 600. In other examples, different components of an example apparatus or system that implements the method flow 600 may perform functions at substantially the same time or in a specific sequence.

The user device 602 is a device used by the user to access at least one user interface provided by an online platform using a communication network (for example, but not limited to, Internet, Wi-Fi, and the like) supported by the user device 602. The user, via the user device 602, may provide inputs and communicate with the at least one user interface provided by the online platform to perform customization on a layout corresponding to the body of the smart card 100.

The online platform, as an example, may be a website hosted by the server 604. The user device 602 may comprise any device operated by the user, such as but not limited to a smartphone, a tablet, a phablet, a laptop, a desktop, a smartwatch, a smart TV, and the like.

The server 604 comprises suitable logic, circuitry, interfaces, and/or code for hosting a website or an application related to card customization that are accessed by the user devices 602. In an embodiment, the server 604 may be a web server hosted by a service provider offering card customization service. In an embodiment, the server 604 may store card customization data and/or user profile information associated with each of a plurality of users interacting with the website or application via respective user devices. In an embodiment, the server 604 may be configured to receive the card customization data either from the website or application running on the user device 602 in real-time for collision detection.

At step 606, a user, who wishes to customize user's card, sends a request for card customization, via the user device 602, by accessing an online platform provided by the server 604. The user may access a website or an application running on the user device 602 that offers card customization service. In an embodiment, the user, via the user device 602, may send the card customization request by selecting one or more icons on a user interface provided by the online platform. In another embodiment, the request may be sent by the user, via the user device 602, by entering user-related information and/or card related information on the user interface. As an example, the user can enter user's credentials such as but not limited to username, user's address, user's email ID, and/or user's contact number. Further, the user can enter card related information such as but not limited to card number, card type, card account type, and/or card expiry details. The entry of such information may be permitted only after the user signs up on the website or application by user profile creation.

The server 604, upon receiving the request for card customization from the user, at step 608, may provide a specific user interface for card customization on the online platform for customization of the card associated with the user. The specific user interface may be accessed by the user via a display screen of the user device 602.

Upon accessing the specific user interface provided on the online platform, the user device 602, at step 610, may be required to enter user-related (for example, username or card holder name) or card-related information (for example, card number or card expiry details) on the specific interface for card customization. In some embodiments, the card-related information may be entered by the user at the time of sending the request at step 606 prior to accessing the specific interface. The user may be required to confirm the sent request for card customization at step 606 by selecting a confirmation or submit button on the specific interface.

The user-related or card-related information shared by the user at step 610 or during step 606 may be parsed by the server 604 to identify the allowed area 202 and one or more exclusion zones 204 on the body of the card (for example, smart card 100) for which customization is required. Such information collected by the server 604, allows the server 604 to render a card layout, at step 612, on the specific interface with designated first area 202 (or allowed area) and designated one or more exclusion zones 204 within the first area 202. The designation of the first area 202 and the one or more exclusion zones 204 may be performed by the CIA or in accordance with industry standards. In an embodiment, an issuing authority may decide the permissible first area 202 and the one or more exclusion zones 204 on the user's card. In another embodiment, a central governing authority may determine the permissible first area 202 and the one or more exclusion zones 204 in accordance with generic guidelines issued for design interface of a smart card. In yet another embodiment, a service provider that facilitates card customization may designate an area on the user's card as allowed area 202 and may designate any of the areas on the body of the card 100 as one or more exclusion zones 204, based on the user-related and/or card-related information provided by the user.

Upon receiving the card layout with designated first area 202 and the one or more exclusion zones 204, the user device 602, at step 614, may place one or more objects 302 at any position in the designated first area 202. Without limitation, the one or more objects 302 may stem from user's creativity or selected from a library of predefined objects. The server 604 may receive placement of the one or more objects 304 at corresponding positions in the designated first area 202. At step 616, the server 604 performs the process of collision detection by applying a collision detection mechanism for each of the one or more objects 302 placed by the user and the designated one or more exclusion zones 204. In preferable implementations, the collision detection may be performed by applying SAT.

Upon detecting a collision between a user-placed object, among the one or more objects 302, and any of the one or more exclusion zones 304, a prompt is generated to indicate the occurrence of collision at step 618. In an embodiment, generating the prompt may comprise changing a color of a boundary of the colliding object (for example, 302A). As an example, the boundary of the colliding object (for example, 302A) may turn red to indicate the collision with any of the one or more exclusion zones 304 such that the submit button is disabled until a position of the colliding object (for example, 302A) is adjusted or changed to avoid collision.

In response to the detected collision, at step 620, the user device 602 adjusts the position of the colliding object 302A such that the object 302A is placed at a non-colliding position with any of the one or more exclusion zones 304 within the allowed area 202. In an embodiment, the server 604 executes the collision detection mechanism at every position where the object 302A is placed on the layout. If there is a collision detected, at step 622, steps 618 and 620 are repeated iteratively until the object 302A is placed at a position that does not collide with any of the one or more exclusion zones 304. In an embodiment, steps 618 and 620 are repeated until the object 302A is removed (or cancelled), the size of the object 302A is reduced, or the object 302A is resize so that it does not collide with any of the one or more exclusion zones 304. In an another embodiment, when there is no collision detected between the user-placed object 302 and any of the one or more exclusion zones 304, the placement of the object 302 in the allowed area 202 is accepted by the server 604.

Further, at step 624, a customized card with user-placed objects 302 on the body of the card 100 may be generated by the server 604 via the online platform. The co-existence of the user-placed objects 302 along with the one or more exclusion zones 204 may be approved by the CIA or other issuing authority in accordance with compliance regulations. In an embodiment, a preview of a layout of the customized card may be displayed to the user on the user interface. In another embodiment, a modified layout of the customized card may be displayed to the user on the user interface after making changes in positions or design of elements based on the compliance regulations. In yet another embodiment, the user may provide a final confirmation or suggest edits to the final layout of the customized card via the user device 602 before the generation of customized card.

The proposed solution in the present disclosure offers certain advantages over conventional approaches. For example, application for SAT in collision detection between user-placed objects 302 and exclusion zones 204 drives efficiency. Precisely, SAT can quicky determine if the two shapes corresponding to a user-placed object 302 and an exclusion zone 204 are colliding by projecting them onto potential separating axes. If no overlap occurs on any axis, a collision can be confidently ruled out. Further, the foundation of SAT is relatively straightforward, making it easier to implement compared to more complex algorithms. Additionally, since SAT can handle multiple shapes efficiently, it is suitable for complex environments with many objects. SAT also provides precise results, allowing for accurate collision responses. Therefore, the collision detection between at least two areas on the body of the card 100 offers a proper balance of efficiency, simplicity, and accuracy, while overcoming the challenges of conventional approaches.

Further, drawbacks of the conventional approaches are overcome by the present solution described in various embodiments of the present disclosure. The allowed area 202, as described, covers entire area of the card (for example, front face) without leaving any space unutilized. Therefore, the area for user customization is maximized by the present solution. Further, the designated allowed area 202 remains the same regardless of the number of exclusion zones 204 designated by the present system. The collision detection mechanism is applied at back-end, for example, to accept or reject a placement of a user-placed object 302 with respect to the exclusion zones 204 accurately and efficiently without any delay. The user is enabled to make adjustments for proper placement of the creative elements (i.e., objects 302) without compromising on the reserved areas (i.e., exclusion zones 204).

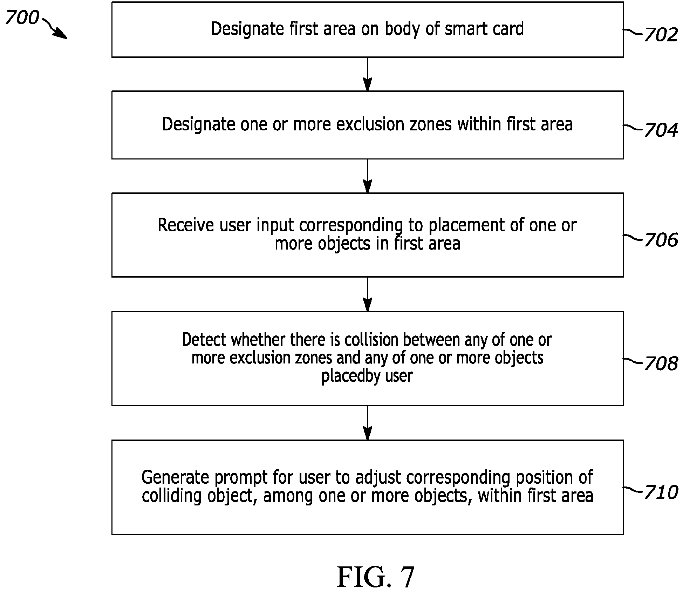

Figure 7 illustrates a flowchart 700 for detecting collision between at least two areas on the body of the smart card, according to an embodiment of the present invention. Flowchart 700 will be explained in conjunction with the previous figures. Although the example method utilized for flowchart 700 depicts a particular sequence of operations, the sequence may be altered without departing from the scope of the present disclosure. For example, some of the operations depicted may be performed in parallel or in a different sequence that does not materially affect the function of the flowchart 700. In other examples, different components of an example apparatus or system that implements the flowchart 700 may perform functions at substantially the same time or in a specific sequence.

Initially, at step 702, a first area is designated on a body of a smart card. In embodiments, the first area 202 corresponds to the allowed area 202 where the user is allowed to customize by placing the one or more objects 302 on a layout corresponding to the body of the smart card 100. In an embodiment, the designated first area 202 for each card may be determined by an issuing authority.

Subsequently, at step 704, one or more exclusion zones are designated within the first area. In embodiments, any number of exclusion zones 204 may be designated within the first area or the allowed area 202. In an embodiment, the number and type of exclusion zones 204 designated on the body of the card 100 may be based on a type of payment card, a type of user privileges with the card holder, regulations of the issuing authority or industry standards. In another embodiment, the one or more exclusion zones 204 are designated by the issuing authority of the card. In preferred implementations, the exclusion zones 204 may correspond to at least one of a chip area; an area indicating a logo of the issuing authority of the card, card number, name of card holder, or expiry details of the card; or an area indicating a logo of a payment scheme associated with the card. Different exclusion zones are explained previously as the exclusion zones 204A-F.

At step 706, a user input is received corresponding to placement of one or more objects in first area. In embodiments, the user may decide to place one or more objects 302 in the first area 202. The one or more objects 302 may correspond to at least one of sticker, text, monogram, or image. In an embodiment, the user may select the one or more objects 302 from the library of predefined objects available on the online platform. In an alternate embodiment, the user may be provided with a canvas to create the one or more objects 302 of their choice by drawing, sketching, or manually selecting an object from a database or repository available on the user device 602. For example, the user may select a sticker from a folder on the user device 602 and place the selected sticker on the layout corresponding to the allowed area 202. The ability to select an object from the user device 602 may be provisioned on the user interface for card customization.

After receiving the user input, at step 708, it is detected whether there is a collision between any of the one or more exclusion zones and any of the one or more objects placed by the user. In embodiments, the collision detection is performed by application of SAT to detect a collision between a shape of an object 302 placed by the user and the shape of the one or more exclusion zones 204. Both the shapes should be non-colliding or non-overlapping for accepting the placement of a particular user-placed object 302. For example, a user-placed object 302 such as a sticker, text, monogram, or image should be placed at a non-colliding position with respect to each of the one or more exclusion zones 204, in accordance with the regulations of the issuing authority.

In response to a detection of the collision, at step 710, a prompt is generated to adjust a corresponding position of a colliding object, among the one or more objects, within first area to avoid collision with any of the one or more exclusion zones. In embodiments, the prompt is generated on the user interface of the online platform to indicate to the user that the position on which the object (for example, 302A) is placed on the layout is colliding and hence, needs to be adjusted or moved to a new non-colliding position with respect to the one or more exclusion zones 204. In an embodiment, the prompt is generated by changing a color of the boundary of the colliding object 302A. In another embodiment, the prompt may be generated by displaying a dialog box for the user to adjust the position of the colliding object 302A. In yet another embodiment, the colliding object 302A may be highlighted on the layout in a particular color to indicate collision and require a user input to change the position of the colliding object 302A. In yet another embodiment, after displaying the prompt in response to collision detection, another input may be received from the user corresponding to the adjusted position of the colliding object 302A. Subsequently, a layout corresponding to the body of the card 100 may be displayed after the adjustment. In other embodiments, instead of generating the prompt, any type of visual or audio indicator may be presented to the user to indicate the collision between a user-placed object and any of the one or more exclusion zones 204. For example, as soon as an overlap or collision is detected between the user-placed object and any of the one or more exclusion zones 204, the colliding object 302A may turn into a colour different than the colour of other objects on the user interface. As another example, the collision may be indicated by a particular sound or beep until the user moves the current position of the colliding object 302A to a new position.

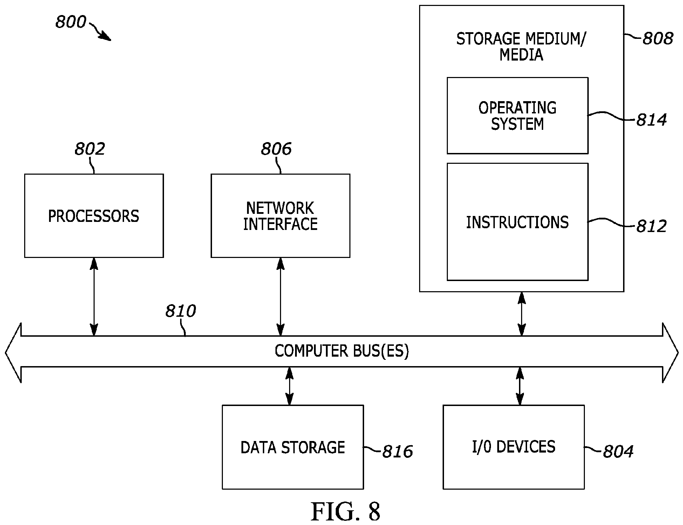

Figure 8 illustrates a block diagram of a system 800 that may be utilized for detecting collision, in accordance with implementations of the present invention. In an example, the system 800 may implement a function of the server 604, which may be a general-purpose server or a dedicated server to enable card customization for users. The server 604, as previously described, may be associated with an issuing authority or a service provider offering card customization services. In another example, the system 800 may be deployed on external platforms such as cloud, internal corporate cloud computing clusters, organizational computing resources, and/or the like. Further, in some embodiments, computing machines such as desktops, laptops, smartphones, tablets, and wearables, which may be used to implement tasks, may have the structure of the system 800. The system 800 may comprise additional components not shown and that some of the process components described may be removed and/or modified.

The system 800 comprises processor(s) 802, input/output devices 804, a network interface 806, and a computer-readable (or storage) medium 808. Each of these components may be operatively coupled to a bus 810.

The processor(s) 802 can comprise a central processing unit, application-specific integrated circuit (ASIC), digital signal processor (DSP), or another type of processing circuit. The processor(s) 802 may be implemented using mainframe, distributed processor, multi-core, parallel, grid, or other architectures. The processor(s) 802 may be configured to implement the functions, procedures, and/or methods proposed by the present invention as described in Figures 1 to 7. Further, layers of a wireless interface protocol may be implemented by the processor(s) 802.

The input/output devices 804 may comprise one or more input and output devices. The input device may be a keyboard, mouse, joystick, (infrared) remote control, camera, card reader, fax machine, dongle, biometric reader, microphone, touch screen, touchpad, trackball, sensor (for example, accelerometer, light sensor, GPS, gyroscope, proximity sensor, or the like), stylus, scanner, storage device, transceiver, video device/source, visors, and the like. The output device may be a printer, fax machine, video display, liquid crystal display (LCD), light-emitting diode (LED), Organic-LED (OLED), Quantum Dot Light Emitting Diode (QLED), Micro LED, Mini-LED, Quantum Dot OLED (QD-OLED), audio speaker, and the like.

The network interface 806 may be a Local Area Network (LAN) interface, a wireless 802.11x interface, a 3G, 4G, 5G, or 6G mobile WAN or a WiMax WAN. The network interface 806 connects the system 800 to internal systems, for example, via a LAN. Also, the network interface 806 may connect the system 800 to the Internet. For example, the system 800 may connect to web browsers and other external applications and systems via the network interface 806.

The computer-readable medium 808 may be any suitable medium that participates in providing instructions to the processor(s) 802 for execution. For example, the computer-readable medium 808 may be non-transitory or non-volatile medium, such as a magnetic disk or solid-state non-volatile memory or volatile medium such as RAM. The instructions or modules stored on the computer-readable medium 808 may comprise machine-readable instructions 812 executed by the processor(s) 802 that cause the processor(s) 802 to perform the methods and functions of the system to detect collision between the user-placed objects (for example, 302) and the exclusion zones (for example, 204). Further, the computer-readable medium 808 may be communicatively coupled to the processor(s) 802 and store information related to operations of the processor(s) 802. The computer-readable medium 808 may be located inside or outside the processor 802 and may be connected to the processor(s) 802 through various well-known means.

The system 800 may be implemented as software stored on a non-transitory processor-readable medium and executed by the processors 802. For example, the computer-readable medium 808 may store operating system 814, such as MAC OS, MS WINDOWS, UNIX, or LINUX, and code for the system 800. The operating system 814 may be multi-user, multiprocessing, multitasking, multithreading, real-time, and the like. For example, during runtime, the operating system 814 is running and the code for the system is executed by the processor(s) 802.

The system 800 may comprise a data storage 816, which may comprise non-volatile data storage. The data storage 816 stores any data used or generated by the system 800.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (as an example., one or more scripts stored in a markup language document), in a single file dedicated to the program in question, or in multiple coordinated files (as an example, files that store one or more modules, sub programs, or portions of code). A computer program may be deployed to be executed on one computer or on multiple computers that are located at one site or distributed across multiple sites and interconnected by a communication network.

To provide for interaction with a user, implementations may be realized on a computer having a display device for displaying information to the user and a keyboard and a pointing device (for example, a mouse, a trackball, a touchpad), by which the user may provide input to the computer. Other kinds of devices may be used to provide for interaction with a user as well; for example, feedback provided to the user may be any appropriate form of sensory feedback (for example, visual feedback, auditory feedback, tactile feedback); and input from the user may be received in any appropriate form, including acoustic, speech, or tactile input.

Implementations may be realized in a computing system that comprises a back end component (for example, as a data server), a middleware component (for example, an application server), and/or a front end component (for example, a client computer having a graphical user interface or a Web browser, through which a user may interact with an implementation), or any appropriate combination of one or more such back end, middleware, or front end components. The components of the system may be interconnected by any appropriate form or medium of digital data communication (for example, a communication network). Examples of communication networks comprise a local area network (LAN) and a wide area network (WAN), for example, the Internet.

The computing system may comprise clients and servers. A client and server are generally remote from each other and typically interact through a communication network. The relationship between client and server arises by virtue of computer programs running on the respective computers and having a client-server relationship with each other.

Implementations and all of the functional operations described in this description may be realized in digital electronic circuitry, or in computer software, firmware, or hardware, including the structures disclosed in this description and their structural equivalents, or in combinations of one or more of them.

The foregoing discussion of the disclosure has been presented for purposes of illustration and description. The foregoing is not intended to limit the disclosure to the form or forms disclosed herein. In the foregoing detailed description for example, various features of the disclosure are grouped together in one or more examples, configurations, or aspects for the purpose of streamlining the disclosure. The features of the examples, configurations, or aspects of the disclosure may be combined in alternate examples, configurations, or aspects other than those described above. Hence, the present disclosure and drawings should not be considered in a limiting sense, as it is understood that an invention presented within a disclosure is in no way limited to those examples specifically illustrated.

Accordingly, the above description and any accompanying drawings, illustrations, and figures are intended to be illustrative but not restrictive. The scope of any invention presented within this disclosure should, therefore, be determined not with simple reference to the above description and those examples shown in the figures, but instead should be determined with reference to the pending claims along with their full scope or equivalents.

**Claims**

1. A method (700) of detecting collision between at least two areas on a body of a smart card, said method (700) comprising:

    designating (702) a first area on said body of said smart card, said first area corresponding to an area where a user is allowed to customize by placing one or more obj ects;
    designating (704) one or more exclusion zones within said first area, said one or more exclusion zones corresponding to one or more areas on said body of said smart card where customization by said user is prohibited;
    receiving (706) a user input corresponding to placement of said one or more objects in said first area;
    detecting (708) whether there is a collision between any of said one or more exclusion zones and any of said one or more objects placed by said user; and
    in response to a detection of said collision, generating (710) a prompt for said user to adjust a corresponding position of a colliding object, among said one or more objects, within said first area to avoid collision with any of said one or more exclusion zones.

2. The method (700) according to claim 1, wherein said collision is detected by application of a separating axis theorem.

3. The method (700) according to claim 1, wherein said one or more exclusion zones correspond to at least an area where a chip is placed on said body of said smart card.

4. The method (700) according to claim 1, wherein said one or more exclusion zones correspond to at least one of an area indicating a logo of an issuing authority of said smart card, card number, name of card holder, or expiry details of said smart card.

5. The method (700) according to claim 1, wherein said one or more exclusion zones correspond to at least an area indicating a logo of a payment scheme associated with said smart card.

6. The method (700) according to claim 1, wherein said one or more objects correspond to at least one of sticker, text, monogram, or image.

7. The method (700) according to claim 1, wherein said receiving (706) said user input comprises receiving a selection of said one or more objects by said user from a library of predefined objects.

8. The method (700) according to claim 1, further comprising in response to a detection that there is no collision between any of said one or more exclusion zones and any of said one or more objects:

accepting placement of said one or more objects in said first area; and
generating (624) a customized smart card for said user by customizing said body of said smart card with said one or more objects placed by said user.

9. The method (700) according to claim 1, wherein said one or more exclusion zones are designated by an issuing authority of said smart card.

10. The method (700) according to claim 1, wherein said generating said prompt comprises changing a colour of a boundary of said colliding object.

11. A system (800) to detect collision between at least two areas on a body of a smart card (100), said system (800) comprising:

one or more processors (802); and
a storage medium (808) communicatively coupled to said one or more processors (802), said storage medium (808) comprising one or more executable instructions (812),
wherein said one or more processors (802), upon execution of said one or more executable instructions (812), are configured to:

designate a first area (202) on said body of said smart card (100), wherein said first area (202) corresponds to an area where a user is allowed to customize by placement of one or more objects (302);
designate one or more exclusion zones (204) within said first area (202),

wherein said one or more exclusion zones (204) correspond to one or more areas on said body of said smart card (100) where customization by said user is prohibited;

detect whether there is a collision between any of said one or more exclusion zones (204) and any of said one or more objects (302) placed by said user; and
in response to a detection of said collision, cause generation of a prompt for said user to adjust a corresponding position of a colliding object (302A), among said one or more objects (302), within said first area (202) to avoid collision with any of said one or more exclusion zones (204).

12. The system (800) according to claim 11, further comprising a user interface to:

receive an input corresponding to placement of said one or more objects (302) by said user;
display said prompt in response to said detection of said collision;
receive (620) another input corresponding to said adjusted position of said colliding object (302A); and
display a layout of said body of said smart card (100) after said adjustment.

13. The system (800) according to claim 11, wherein said collision is detected by application of a separating axis theorem.

14. The system (800) according to claim 11, wherein said one or more exclusion zones (204) correspond to at least an area where a chip (204C) is placed on said body of said smart card (100).

15. The system (800) according to claim 11, wherein said one or more objects (302) correspond to at least one of sticker, text, monogram, or image.

100

102

104

FIG. 1A

100

102

104

FIG. 1B

(PRIOR ART)

FIG. 2

FIG. 3

SEU NOME ESTARA AQUI

FIG. 4

FIG. 5

600

| User Device | ~602 |

606 -Request for card customization

608 -Provide interface for card customization

610 -Provide user information associated
with card to be customized

612 -Render card layout with designated first area
and one or more exclusion zones

614 -Add one or more objects in first area

| Server | ~604 |

| Collision Detection | ~616 |

618 -Generate prompt for colliding object(s)

620 -Adjust position(s) of colliding object(s)

622 -Repeat 618 and 620 until no collision detection

| Generate customized card after approval from issuing authority | ~624 |

FIG. 6

700

Designate first area on body of smart card ~702

Designate one or more exclusion zones within first area ~704

Receive user input corresponding to placement of one or more objects in first area ~706

Detect whether there is collision between any of one or more exclusion zones and any of one or more objects placedby user ~708

Generate prompt for user to adjust corresponding position of colliding object, among one or more objects, within first area ~710

FIG. 7

800

STORAGE MEDIUM/
MEDIA — 808

OPERATING
SYSTEM — 814

INSTRUCTIONS — 812

802

PROCESSORS

806

NETWORK
INTERFACE

810

COMPUTER BUS(ES)

DATA STORAGE — 816

I/0 DEVICES — 804

FIG. 8

Europäisches
Patentamt

European
Patent Office

Office européen
des brevets

# EUROPEAN SEARCH REPORT

**Application Number**

EP 24 30 7338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/327225 A1 (BECK BRIAN CHRISTOPHER [US]) 21 October 2021 (2021-10-21) * abstract; figures * * paragraphs [0071] - [0102] * ----- | 1-15 | INV. G06Q20/34 G06F3/04845 G06K1/12 G07F7/08 |
| X | US 2007/215699 A1 (AREGO JOHN [US] ET AL) 20 September 2007 (2007-09-20) * abstract; figures * * paragraphs [0037] - [0058] * ----- | 1-15 | |
| X | US 2007/267485 A1 (FERRARA TOM [US] ET AL) 22 November 2007 (2007-11-22) * abstract; figures * * paragraphs [0022] - [0026] * ----- | 1-15 | |
| A | US 2018/032481 A1 (ISHIDA TOMOYA [JP]) 1 February 2018 (2018-02-01) * abstract; figures * * paragraphs [0038], [0066] * ----- | 1-15 | |
| A | US 2021/312096 A1 (BOWEN MICHAEL [US]) 7 October 2021 (2021-10-07) * abstract; figures * * paragraphs [0089] - [0093], [0326], [0429], [0434] * ----- | 1-15 | **TECHNICAL FIELDS SEARCHED (IPC)** G06Q G06K G06F G07F |

The present search report has been drawn up for all claims

| Place of search | Date of completion of the search | Examiner |
|---|---|---|
| The Hague | 6 June 2025 | Schöndienst, Thilo |

## ANNEX TO THE EUROPEAN SEARCH REPORT
## ON EUROPEAN PATENT APPLICATION NO.

EP 24 30 7338

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2025

| Patent document cited in search report | | Publication date | Patent family member(s) | | Publication date |
|---|---|---|---|---|---|
| US 2021327225 | A1 | 21-10-2021 | US | 2018308141 A1 | 25-10-2018 |
| | | | US | 2021327225 A1 | 21-10-2021 |
| US 2007215699 | A1 | 20-09-2007 | NONE | | |
| US 2007267485 | A1 | 22-11-2007 | US | 2007267485 A1 | 22-11-2007 |
| | | | US | 2011278358 A1 | 17-11-2011 |
| | | | US | 2013066739 A1 | 14-03-2013 |
| | | | WO | 2007136808 A2 | 29-11-2007 |
| US 2018032481 | A1 | 01-02-2018 | JP | 6742850 B2 | 19-08-2020 |
| | | | JP | 2018019330 A | 01-02-2018 |
| | | | US | 2018032481 A1 | 01-02-2018 |
| US 2021312096 | A1 | 07-10-2021 | US | 2020159870 A1 | 21-05-2020 |
| | | | US | 2021312096 A1 | 07-10-2021 |

EPO FORM P0459

For more details about this annex : see Official Journal of the European Patent Office, No. 12/82